# EUROPÄISCHE PATENTSCHRIFT

(11) **EP 0 515 899 B1**
(45) Veröffentlichungstag und Bekanntmachung des Hinweises auf die Patenterteilung: **02.08.1995**
(21) Anmeldenummer: 92108025.5
(22) Anmeldetag: 13.05.1992
(51) Int. Cl.: C08L 61/20, B27N 7/00, C08L 61/28, B32B 29/00, D21H 27/24

(54) **Wässrige Tränkharzlösungen**
Aqueous solutions of impregnating resins
Solutions aqueuses de résines d'imprégnation

(30) Priorität: 31.05.1991 DE 4117844
(43) Veröffentlichungstag der Anmeldung: 02.12.1992
(73) Patentinhaber: BASF Aktiengesellschaft, 67063 Ludwigshafen (DE)
(72) Erfinder: Kirchgaessner, Uwe, Dr., W-6701 Kallstadt (DE); Decher, Jakob, W-6712 Bobenheim-Roxheim (DE); Niessner, Manfred, Dr., W-6707 Schifferstadt (DE); Wittmann, Otto, W-6710 Frankenthal (DE); Pohl, Hans Henning, Dr., W-6730 Neustadt (DE)

(56) Entgegenhaltungen:
- FR-A- 2 162 220
- GB-A- 1 182 420
- US-A- 4 454 199
- Derwent Publications Ltd., London, GB; AN 88-357100 ; & JP-A-63 267 505
- Derwent Publications Ltd., London, GB; AN 70-28770R ; & JP-A- 45 010 272

## Beschreibung

Die vorliegende Erfindung betrifft wäßrige Tränkharzlösungen, enthaltend
A) ein wäßriges Vorkondensat auf Basis von Melamin und Formaldehyd und gewünschtenfalls Harnstoff
und
B) 5 bis 40 Gew.%, bezogen auf den Feststoffgehalt von A), einer quartären Ammoniumverbindung der allgemeinen Formel I 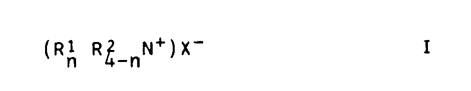 wobei n = 0,1, 2, 3 ist, R¹ für einen C₁-C₈-Alkylrest oder einem Benzylrest steht, R² einen C₁-C₈-Alkylrest bedeutet, der eine Hydroxy- oder eine Amidogruppe trägt, und X für ein Äquivalent eines Anions steht.

Weiterhin betrifft die Erfindung ein Verfahren zur Herstellung solcher Tränkharzlösungen sowie deren Verwendung zur antistatischen Ausrüstung beschichteter Holzwerkstoffe.

Elektrisch leitfähige Holzwerkstoffplatten finden derzeit hauptsächlich nur in der Doppelboden-Industrie zum antistatischen Verbund der Doppelboden-Elemente Verwendung. Im Möbel- und Einrichtungsbereich für EDV-Büroräume und für den Reinraumbereich werden jedoch in letzter Zeit vermehrt Anforderungen an antistatische Eigenschaften dieser Gegenstände gestellt, da moderne Elektronikbauteile sehr empfindlich gegenüber elektrostatischer Entladung reagieren.

In der US-A-4 454 199 wird die Herstellung von elektrisch leitfähigen HP (high pressure)-Papier-Schichtstoffen beschrieben, wobei in der obersten Schicht eine quartäre Ammoniumverbindung als leitfähige Komponente enthalten ist; dabei werden vor allem Dialkyldiallylammoniumsalze sowie deren Polymere eingesetzt.

Die DE-OS 22 58 287 betrifft die antistatische Ausrüstung von Papieren, wie sie beispielsweise für die Herstellung von Kohlepapieren verwendet werden, mit einer niedermolekularen quartären Ammoniumverbindung.

Bisher bekannte Systeme weisen jedoch Nachteile bezüglich des Penetrationsvermögens der Tränkharzlösungen, der Lagerstabilität und der Vergrauung der Oberflächen auf, wobei die Vergrauung besonders bei unifarbenen Dekorpapieren auftritt.

Aufgabe der vorliegenden Erfindung war es, Tränkharzlösungen zu finden, die zur Herstellung von filmbeschichteten Holzwerkstoffen mit antistatisch ausgerüsteten Oberflächen geeignet sind. Die Harzlösungen sollen bezüglich des Penetrationsvermögens, der Lagerstabilität und der Oberflächen-vergrauung verbesserte Eigenschaften aufweisen.

Demgemäß wurden die eingangs definierten Tränkharzlösungen gefunden.

Als Komponente (A) kommen wäßrige Melamin-Formaldehyd-Vorkondensate in Betracht, wobei das Molverhältnis von Melamin zu Formaldehyd 1:1,4 bis 1:2,2 betragen kann. Die Kondensation von Melamin und Formaldehyd erfolgt unter an sich bekannten Bedingungen im basischen Milieu bei pH-Werten von 8 bis 10 und Temperaturen von 80 bis 100°C.

Weiterhin kommen auch Mischkondensate in Betracht, bei denen von 1 bis 10 Gew.% Harnstoff, bezogen auf Melamin, einkondensiert sein kann. Die Herstellung solcher Mischkondensate ist bekannt und wird üblicherweise bei pH-Werten von 8 bis 10 und Temperaturen von 70 bis 100°C durchgeführt.

Der Endpunkt der jeweiligen Kondensationsreaktion kann über die Trübungstemperatur bestimmt werden, indem 1 g des Reaktionsgemisches mit der 5fachen Menge an Wasser versetzt werden, worauf die Temperatur gemessen wird, bei der diese Mischung sich eintrübt.

Üblicherweise wird bis zu Trübungstemperaturen von 40 bis 60°C kondensiert.

Bei der Herstellung der Kondensate können auch übliche Modifizierungsmittel wie Ethylenglykol, Diethylenglykol oder andere Polyalkohole wie beispielsweise Zuckerderivate oder ε-Caprolactam in Mengen von 2 bis 8 Gew.%, bezogen auf den Feststoffgehalt, mitverwendet werden.

Die Herstellung der wäßrigen Kondensate (A) erfolgt vorteilhaft so, daß Lösungen mit Feststoffgehalten von 40 bis 70 Gew.% erzielt werden. Als Feststoffgehalt wird hier der Trockenrückstand bezeichnet, der ermittelt wird, indem 1 g Harzlösung zwei Stunden lang im Trockenschrank bei 120°C getrocknet wird.

Als niedermolekulare quartäre Ammoniumverbindungen (B) kommen Verbindungen der allgemeinen Formel I in Betracht, 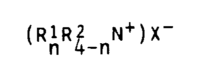
wobei n = 0, 1, 2, 3 ist, R¹ für einen C₁-C₈-Alkylrest oder einen Benzylrest steht und R² einen C₁-C₈-Alkylrest bedeutet, der als funktionelle Gruppe die Hydroxygruppe oder die Amidogruppe aufweist, wobei sich die funktionelle Gruppe vorzugsweise in endständiger Position befindet.

X steht für ein Äquivalent eines Anions. Dabei kommen Anionen von Mineralsäuren wie Halogenidanionen, vorzugsweise Chlorid, in Betracht sowie Nitrat, Sulfat, Hydrogensulfat, Phosphat, Hydrogenphosphat oder Dihydrogenphosphat. Weiterhin eignen sich Alkylsulfate wie beispielsweise Methylsulfat oder Ethylsulfat oder auch Alkylsulfonate wie Methylsulfonat oder Ethylsulfonat oder auch Arylsulfonate wie Toluolsulfonate. Auch Anionen organischer Säuren wie Formiat, Oxalat, Acetat oder Maleinat kommen in Betracht.

Vorzugsweise werden als Komponente (B) N-(2-Hydroxyethyl)-trialkyl-ammoniumsalze eingesetzt. Besonders bevorzugt ist die Verwendung von N-(2-Hydroxyethyl)-trimethylammonium-chlorid oder N-(2-Hydroxyethyl)-trimethylammonium-methylsulfat.

Die Menge an (B) wird so gewählt, daß, bezogen auf den Feststoffgehalt von (A), 5 bis 40 Gew.-% an (B) zugesetzt werden, wobei besonders bevorzugt 8 bis 25 Gew.-% an (B) verwendet werden.

Die Komponente (B) kann in fester oder in Form einer 60 bis 80 gew.%igen wäßrigen Lösung mit dem wäßrigen Kondensat (A) gemischt werden.

Besonders vorteilhafte Eigenschaften weisen die erfindungsgemäßen Tränkharzlösungen dann auf, wenn die Komponente (B) bereits zu Beginn der Kondensation von Melamin, gegebenenfalls Harnstoff und Formaldehyd zugesetzt wird.

Die erfindungsgemäßen Tränkharzlösungen weisen bei Feststoffgehalten von 40 bis 70 Gew.%, gemessen als Trockenrückstand, Viskositäten im Bereich von 40 bis 120 mPa·s (20°C) auf.

Die erfindungsgemäßen Tränkharzlösungen eignen sich hervorragend zur Beschichtung von Holzwerkstoffen durch Verpressen von mit der Tränkharzlösung imprägnierten Dekorpapieren mit dem Holzwerkstoff. Außerdem zeichnen sich die Tränkharzlösungen durch ein sehr gutes Penetrationsvermögen beim Imprägniervorgang aus, d.h. die Tränkharzlösung dringt sehr schnell in das zu imprägnierende Papier ein. Weiterhin weisen die erfindungsgemäßen Tränkharzlösungen eine gute Lagerstabilität auf. Ein Maß für die Lagerstabilität sind u.a. der Eintrübungsgrad, der pH-Wert-Verlauf, der Viskositätsanstieg und die Penetrationszeit. Die erfindungsgemäßen Tränkharzlösungen weisen hinsichtlich dieser Parameter ein positives Verhalten auf.

Zur Anwendung als Imprägnierflotten werden den Tränkharzlösungen wie allgemein üblich Härter zugesetzt. Als Härter kommen dabei beispielsweise Maleinsäure, Maleinsäureanhydrid, Ameisensäure, Ammoniumsulfat, Ammoniumsulfit, Ethanolaminhydrochlorid, Dimethylethanolammoniumsulfit sowie Härterkombinationen wie Morpholin/p-Toluolsulfonsäure, N-Methyl-Ethanolamin/SO₂ oder N-Methylethanolamin/Ethanolamin/SO₂ in Betracht.

Die Härter können in Mengen von 0,2 bis 2 Gew.%, bezogen auf die Tränkharzlösung, zugegeben werden, wobei dem Fachmann bekannt ist, wie er die Härterdosierung den jeweiligen anwendungstechnischen Erfordernissen anpassen kann, wobei er die Reaktivität der Tränkharzlösung/Härter-Gemische über Messung der Trübungszeiten und Gelierzeiten entsprechend einstellen kann.

Weiterhin können den Imprägnierflotten zusätzlich Hilfsmittel wie Netzmittel zugesetzt werden.

Als Netzmittel eignen sich beispielsweise ethoxylierte Fettalkohole oder Alkylphenolethoxylate, die in Mengen von 0,2 bis 0,6 Gew.%, bezogen auf die Harzlösung, zugesetzt werden können.

Bei der Herstellung der Beschichtungen werden zunächst für diesen Zweck übliche Dekorpapiere mit Flächengewichten im Bereich von 60 bis 150 g/m² mit den erfindungsgemäßen Tränkharzlösungen imprägniert, wobei der Harzauftrag ca. 100 bis 150 Gew.%, bezogen auf das Papiergewicht betragen kann. In speziellen Fällen können auch Papiere mit einem Gewicht von 300 g/m² mit einem Harzauftrag von 30 bis 70 Gew.%, oder Overlay-Papiere mit einem Gewicht von ca. 20 g/m² und einem Harzauftrag bis zu 300 Gew.-%, bezogen auf das Papiergewicht imprägniert werden. Für großtechnische Anwendungen erfolgt der Harzauftrag mit Hilfe von Imprägniermaschinen. Beim Imprägniervorgang kommt das vorteilhafte Penetrationsvermögen der Harzlösungen zum Tragen, da die Fahrgeschwindigkeit der Imprägniermaschinen auch vom Penetrationsverhalten der Harzlösungen abhängt.

An den Imprägniervorgang schließt sich ein Trocknungsvorgang an, wobei das beharzte Papier im allgemeinen auf Restfeuchtegehalte von 5 bis 8 Gew.% eingestellt wird.

Die imprägnierten Dekorpapiere können anschließend auf Holzwerkstoffe wie Spanplatten aufgebracht werden, indem sie beispielsweise als sog. "Kurztakt-Filme" bei Temperaturen von 150 bis 210°C und Drücken von 15 bis 30 bar während einer Preßzeit von 20 bis 60 sec mit dem Holzwerkstoffsubstrat verpreßt werden.

Mit den erfindungsgemäßen Tränkharzlösungen lassen sich auch Laminate herstellen.

Die so hergestellten Oberflächen weisen elektrische Oberflächenwiderstände im Bereich von 10⁷ bis 10⁹ Ohm auf und erfüllen die üblichen anwendungstechnischen Forderungen wie beispielsweise guten Glanz und gute Wasserbeständigkeit und zeigen insbesondere keine Vergrauung.

Die Messung der Oberflächenwiderstände, die in den folgenden Beispielen aufgeführt werden, erfolgt nach DIN 53 485 (bei 23°C, 50 % relativer Luftfeuchte).

Die Leitfähigkeiten der wäßrigen Harzlösungen beziehen sich jeweils auf Lösungen mit 55 Gew.-% Festoffgehalt, gemessen bei 20°C.

Die Lagerstabilität wird danach beurteilt, wie lange eine Harzlösung bei 23°C klar bleibt und sich nicht eintrübt.

### Beispiele 1 bis 6

### Allgemeine Vorschrift

Eine Mischung aus 730 g 40 gew.%igem wäßrigen Formaldehyd und 334 g vollentsalztem Wasser wurde auf 30°C temperiert, mit 78 g Diethylenglykol und 38 g ε-Caprolactam versetzt, worauf der pH-Wert des Gemisches mit 25 gew.%iger wäßriger Natronlauge auf 9,2 bis 9,4 eingestellt wurde. Anschließend erfolgte die Zugabe von N-(2-Hydroxyethyl)-trimethylammoniumchlorid (B) und 790 g Melamin. (Die jeweils verwendeten Mengen an Ammoniumverbindung sind in Tabelle I aufgelistet.) Sodann wurde das Reaktionsgemisch auf 100°C erhitzt, wobei der pH-Wert langsam abfiel und ca. 60 min bei pH 8,6 bis 8,8 gerührt. Sobald eine Probe des Reaktions-gemisches eine Trübungstemperatur von 50°C aufwies, wurde das Reaktionsgemisch auf Raumtemperatur abgekühlt und der pH-Wert mit 25 gew.%iger wäßriger Natronlauge auf 10,0 bis 10,2 eingestellt.

**Tabelle I**

| Beispiel | 1 | 2 | 3 | 4 | 5 | 6 |
|---|---|---|---|---|---|---|
| Gehalt an Komponente B¹⁾ | 8,0 | 10,5 | 12,5 | 15,5 | 16,5 | 24,5 |
| Leitfähigkeit [»S/cm] | 3300 | 4100 | 4970 | 5750 | 6500 | 9600 |
| Viskosität [mPa·s] bei 20°C | 75 | 60 | 65 | 60 | 65 | 40 |
| Lagerstabilität [Wochen] | 6-7 | 6 | 6 | 6 | 6 | 5-6 |

| | | | | | | |
|---|---|---|---|---|---|---|
| ¹⁾ Gew.%, berechnet auf den Feststoffgehalt eines Vorkondensats A), welches ohne B) hergestellt wurde. | | | | | | |

### Beispiel 7

Die Herstellung der Tränkharzlösung erfolgte analog der allgemeinen Vorschrift der Beispiele 1 bis 6, jedoch wurde das N-(2-Hydroxyethyl)-trimethylammoniumchlorid erst nach Beendigung der Kondensation in Mengen von 16,5 Gew.%, bezogen auf den Feststoffgehalt des Vorkondensats, zugegeben.

| | |
|---|---|
| Leitfähigkeit: | 7160 »S/cm |
| Viskosität: | 70 mPa·s (20°C) |
| Lagerstabilität: | 4 Wochen |

### Beispiel 8

Die Herstellung erfolgte analog der allgemeinen Vorschrift, jedoch wurden 10 Gew.% des Melamins durch Harnstoff ersetzt. An N-(2-Hydroxyethyl)-trimethylammoniumchlorid (B) wurden 16,5 Gew.%, bezogen auf den Feststoffgehalt von A) ohne (B), zugegeben.

| | |
|---|---|
| Leitfähigkeit: | 6120 »S/cm |
| Viskosität: | 40 mPa·s (20°C) |
| Lagerstabilität: | 3-4 Wochen |

### Beispiel 9

Eine Mischung aus 730 g 40 gew.-%igem Formaldehyd und 334 g Wasser wurde auf 30°C temperiert, mit 78 g Diethylenglykol und 38 g ε-Caprolactam versetzt, worauf der pH-Wert des Gemisches mit 25 gew.-%iger wäßriger Natronlauge auf ca. 9,5 eingestellt wurde. Anschließend erfolgte die Zugabe von 16,5 Gew.-%, bezogen auf den Feststoffgehalt der Tränkharzlösung, N-(2-Hydroxyethyl)-trimethylammonium-methylsulfat und 790 g Melamin. Sodann wurde das Reaktionsgemisch auf 100°C erhitzt, wobei der pH-Wert langsam abfiel und ca. 60 min bei pH 8,6 bis 8,8 gerührt. Sobald eine Probe des Rektionsgemisches eine Trübungstemperatur von 50°C aufwies, wurde das Reaktionsgemisch auf Raumtemperatur abgekühlt und der pH-Wert mit 25 gew.-%iger wäßriger Natronlauge auf 10 bis 10.2 eingestellt.

| | |
|---|---|
| Viskosität der Harzlösung (20°C): | 45 mPa·s |
| Leitfähigkeit (55 %): | 3320 »S/cm |
| Lagerstabilität | 5-6 Wochen |

### Vergleichsbeispiel A

Die Herstellung der Tränkharzlösung erfolgte analog Beispiel 7, jedoch wurde als Ammoniumverbindung polymeres Dimethyldiallylammoniumchlorid ("PolyDADMAC") in Mengen von 16,5 Gew.%, bezogen auf den Feststoffgehalt von A), zugegeben.

| | |
|---|---|
| Leitfähigkeit: | 4120 »S/cm |
| Viskosität: | 70 mPa·s (20°C) |
| Lagerstabilität: | 2-3 Wochen |

### Herstellung der Imprägnierflotten

Zur Herstellung der Imprägnierflotten wurden die Harzlösungen gemäß den Beispielen 1 bis 9 bzw. Vergleichsbeispiel A jeweils mit Wasser auf einen Feststoffgehalt von 55 Gew.-% eingestellt und anschließend mit 0,4 Gew.-%, bezogen auf die Harzlösung, einer 85 gew.-%igen wäßrigen Lösung eines Härters (Dimethylethanolammoniumsulfit) und mit 0,3 Gew.-%, bezogen auf die Harzlösung, eines handelsüblichen Alkylphenolethoxylat-Netzmittels versetzt.

### Anwendungstechnische Prüfung

Es wurden weiße und schwarze Dekorpapiere mit einem Flächengewicht von 80 g/m² imprägniert. Der Harzauftrag betrug 120 bis 150 %, der Restfeuchte-Gehalt wurde auf ca. 6,5 % eingestellt. Die auf diese Weise hergestellten Dekorfilme wurden nach dem Kurztaktverfahren (KT-Film) mit 20 bar bei 180°C und 50 sec Preßzeit auf übliche beschichtungsfähige Spanplatten verpreßt.

Die Eigenschaften der so hergestellten Oberflächen sind in Tabelle II aufgelistet.

Dabei wurde zur Beurteilung des Penetrationsvermögens die Durchtränkzeit folgendermaßen bestimmt:
In einem Becherglas wurden 100 ml Imprägnierflotte (Feststoffgehalt 55 Gew.-%) klimatisiert (bei 23°C/50 % rel. Luftfeuchte). Dann wurde eine Papierscheibe (Φ 40 mm; Rohpapier 80 g/m²), welche ebenfalls vorklimatisiert wurde auf die Lösung gelegt. Die Zeit, bis das Papier vollständig mit Harzlösung benetzt ist, wird als Penetrationszeit in sec. angegeben.

Die Beurteilung der Vergrauung erfolgt visuell an mit schwarzem Dekorpapier (80 g/m²) beschichteten Holzwerkstoffen.

**Tabelle II**

| Tränkharzlsg. n. Bsp. | 1 | 3 | 5 | 6 | 7 | Vgl.bsp. A |
|---|---|---|---|---|---|---|
| Durchtränkzeit [s] | 3-4 | 3 | 2 | 1 | 1 | 11 |
| Oberflächenwiderstand [Ω] | 2·10⁹ | 5·10⁹ | 3·10⁸ | 2·10⁷ | 1·10⁸ | 10⁸-10⁹ |
| Vergrauung | keine | keine | keine | keine | leicht | stark |

## Patentansprüche

1. Wäßrige Tränkharzlösung, enthaltend
A) ein wäßriges Vorkondensat auf Basis von Melamin und Formaldehyd und gewünschtenfalls Harnstoff
und
B) 5 bis 40 Gew.%, bezogen auf den Feststoffgehalt von A), einer quartären Ammoniumverbindung der allgemeinen Formel I 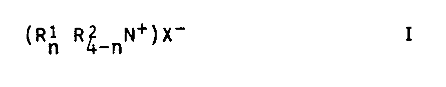 wobei n = 0, 1, 2, 3 ist, R¹ für einen C₁-C₈-Alkylrest oder einen Benzylrest steht, R² einen C₁-C₈-Alkylrest bedeutet, der eine Hydroxy- oder eine Amidogruppe trägt, und X für ein Äquivalent eines Anions steht.

2. Wäßrige Tränkharzlösung nach Anspruch 1, deren Feststoffgehalt im Bereich von 40 bis 70 Gew.% liegt.

3. Wäßrige Tränkharzlösung nach Anspruch 1 oder 2, enthaltend als Komponente (A) ein wäßriges Melamin-Formaldehyd-Kondensat mit einem Molverhältnis von Melamin zu Formaldehyd von 1:1,4 bis 1:2,2.

4. Wäßrige Tränkharzlösung nach einem der Ansprüche 1 bis 3, enthaltend eine Komponente (A), bei der bis zu 10 Gew.% des Melamins durch Harnstoff ersetzt sind.

5. Wäßrige Tränkharzlösung gemäß Anspruch 1, erhältlich durch Kondensation der Komponente (A) in Gegenwart der quartären Ammoniumverbindung (B).

6. Verfahren zur Herstellung einer elektrisch leitfähigen wäßrigen Tränkharzlösung, dadurch gekennzeichnet, daß man ein wäßriges Vorkondensat A) auf Basis von Melamin und Formaldehyd und gewünschtenfalls Harnstoff in Gegenwart von 5 bis 40 Gew.%, bezogen auf den Feststoffgehalt von A), einer quartären Ammoniumverbindung B) der allgemeinen Formel I 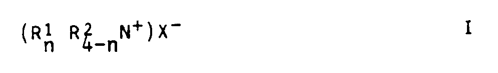 wobei n = 0, 1, 2, 3 ist, R¹ für einen C₁-C₈-Alkylrest oder einen Benzylrest steht, R² einen C₁-C₈-Alkylrest bedeutet, der eine Hydroxy- oder eine Amidogruppe trägt, und X für ein Äquivalent eines Anions steht, bei pH-Werten von 8 bis 10 und Temperaturen von 80 bis 100°C herstellt.

7. Verwendung der Tränkharzlösungen gemäß einem der Ansprüche 1 bis 7 zur Herstellung von filmbeschichteten Holzwerkstoffen mit antistatisch ausgerüsteten Oberflächen.

## Claims

1. An aqueous impregnating resin solution, containing
A) an aqueous precondensate based on melamine and formaldehyde and, if desired, urea
and
B) from 5 to 40% by weight, based on the solids content of A), of a quaternary ammonium compound of the formula I
(R¹ₙR²₄₋ₙN⁺)X⁻ I
where n is 0, 1, 2 or 3, R¹ is C₁-C₈-alkyl or benzyl, R² is C₁-C₈-alkyl which carries a hydroxyl or amido group and X is one equivalent of an anion.

2. An aqueous impregnating resin solution as claimed in claim 1, whose solids content is from 40 to 70% by weight.

3. An aqueous impregnating resin solution as claimed in claim 1 or 2, containing, as component (A), an aqueous melamine/formaldehyde condensate having a molar ratio of melamine to formaldehyde of from 1 : 1.4 to 1 : 2.2.

4. An aqueous impregnating resin solution as claimed in any of claims 1 to 3, containing a component (A) in which up to 10% by weight of the melamine has been replaced by urea.

5. An aqueous impregnating resin solution as claimed in claim 1, obtainable by condensation of the component (A) in the presence of the quaternary ammonium compound (B).

6. A process for the preparation of an electrically conductive aqueous impregnating resin solution, wherein an aqueous precondensate (A) based on melamine and formaldehyde and, if desired, urea is prepared in the presence of from 5 to 40% by weight, based on the solids content of A), of a quaternary ammonium compound B) of the formula I
(R¹ₙR²₄₋ₙN⁺)X⁻ I
where n is 0, 1, 2 or 3, R¹ is C₁-C₈-alkyl or benzyl, R² is C₁-C₈-alkyl which carries a hydroxyl or amido group and X is one equivalent of an anion, at a pH of from 8 to 10 and at from 80 to 100°C.

7. Use of an impregnating resin solution as claimed in any of claims 1 to 7 for the preparation of film-coated woodworking materials having surfaces provided with an antistatic finish.

## Revendications

1. Solution aqueuse de résine d'imprégnation, contenant
A) un produit de précondensation aqueux à base de mélamine et de formaldéhyde et, eventuellement, de l'urée
et
B) 5 à 40% en poids, par rapport à la teneur en solides de A), d'un composé d'ammonium quaternaire de la formule générale I 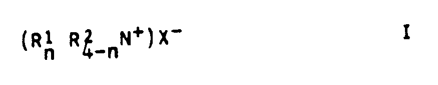 dans laquelle n est égal à 0, 1, 2, ou 3, R¹ représente un radical alkyle en C₁ à C₈, ou un radical benzyle, R² représente un radical alkyle en C₁ à C₈, qui porte un radical hydroxyle ou amido et X représente l'équivalent d'un anion.

2. Solution aqueuse de résine d'imprégnation suivant la revendication 1, dont la teneur en solides se situe dans la plage de 40 à 70% en poids.

3. Solution aqueuse de résine d'imprégnation suivant la revendication 1 ou 2, contenant, à titre de composant (A) un produit de condensation de la mélamine et du formaldéhyde aqueux avec un rapport molaire de la mélamine au formaldéhyde de 1:1,4 à 1:2,2.

4. Solution aqueuse de résine d'imprégnation suivant l'une quelconque des revendications 1 à 3, contenant un composant (A), où jusqu'à 10% en poids de la mélamine sont remplacés par de l'urée.

5. Solution aqueuse de résine d'imprégnation suivant la revendication 1, que l'on peut obtenir par la condensation du composant (A) en présence du composé d'ammonium quaternaire (B).

6. Procédé de préparation d'une solution aqueuse de résine d'imprégnation conductrice de l'électricité, caractérisé en ce que l'on prépare un produit de précondensation aqueux A) à base de mélamine et de formaldéhyde et, éventuellement, d'urée, en présence de 5 à 40% en poids, par rapport à la teneur en solides de A), d'un composé d'ammonium quaternaire B) de la formule générale I 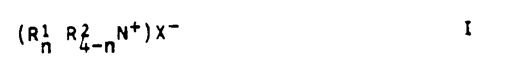 dans laquelle n est égal à 0, 1, 2, ou 3, R¹ représente un radical alkyle en C₁ à C₈, ou un radical benzyle, R² représente un radical alkyle en C₁ à C₈, qui porte un radical hydroxyle ou amido et X représente l'équivalent d'un anion, à des valeurs de pH de 8 à 10 et des températures de 80 à 100°C.

7. Utilisation des solutions de résine d'imprégnation suivant l'une quelconque des revendications 1 à 6 pour la fabrication de matériaux dérivés du bois revêtus d'un film à surfaces rendues antistatiques.
